# EUROPÄISCHE PATENTSCHRIFT

(11) **EP 4 088 953 B1**
(45) Veröffentlichungstag und Bekanntmachung des Hinweises auf die Patenterteilung: **12.02.2025**
(21) Anmeldenummer: 21213361.5
(22) Anmeldetag: 09.12.2021
(51) Int. Cl.: B60C 23/04

(54) **VERFAHREN ZUR ÜBERWACHUNG VON REIFENEIGENSCHAFTEN**
METHOD FOR MONITORING TYRE PROPERTIES
PROCÉDÉ DE SURVEILLANCE DES PROPRIÉTÉS DE PNEU

(30) Priorität: 12.05.2021 DE 102021204886
(43) Veröffentlichungstag der Anmeldung: 16.11.2022
(73) Patentinhaber: Continental Reifen Deutschland GmbH, 30175 Hannover (DE)
(72) Erfinder: Abeling, Stefan, 30165 Hannover (DE); Cyllik, Adrian, 30165 Hannover (DE); Schaefer, Jonni, 30165 Hannover (DE)
(74) Vertreter: Continental Corporation

(56) Entgegenhaltungen:
- DE-A1- 102015 100 716
- DE-A1- 102017 131 300
- DE-A1- 102019 210 583
- US-A1- 2021 101 422

## Beschreibung

Die Erfindung betrifft ein Verfahren zur Überwachung von Reifeneigenschaften. Zur Überwachung von Reifenzuständen, insbesondere einem Reifendruck, von Reifen eines Nutzfahrzeuges sind Reifen-Sensor-Module bzw. Reifenmodule bekannt, die beispielsweise im Inneren eines Reifens angeordnet sind. Derartige Reifen-Sensor-Module sind ausgebildet, positionsgebunden einen Reifendruck zu erfassen, zu verarbeiten und an ein elektronisches Steuergerät (ECU) eines Überwachungssystems zu übertragen. Das Steuergerät nimmt das Datentelegramm über ein Empfangsmodul des Überwachungssystems auf und gibt in Abhängigkeit von Grenzwerten ein Warnsignal an den Fahrer aus, beispielsweise wenn an einem der Reifen ein Reifendruck unterhalb eines Grenzwertes festgestellt wurde. Ein Beispiel für ein solches Reifen-Sensor-Modul offenbart die DE 102 43 441 A1.

Die DE102015100716 A1 und US2021/101422 A1 offenbaren weitere bekannte Reifendruckkontrollsysteme.

Es sind eine Vielzahl von Reifendruckkontrollsystemen bekannt, mit denen Druckverluste erkannt werden können.

Nutzfahrzeuge können mit einer Empfangs- und Auswerteeinheit ausgerüstet, ein sogenanntes On-Board TPMS System, dass die Signale der Reifenmodule der Zugmaschine und/oder des Nutzfahrzeuganhängers empfängt, auswertet, und den Fahrer über den Zustand der Reifen informiert, bzw. die Reifenstati mittels einer verbundenen Telematik Einheit an einen Server senden kann.

Es kann vorkommen, dass ein Nutzfahrzeuganhänger mit Reifen ausgestattet wird, die einzelne Reifenmodule aufweisen, wobei die Zugmaschine nicht über ein On-Board TPMS System verfügt, also keine eigenständige Sende- und Empfangseinheit für die Auswertung der Daten für die Reifenmodule aufweist.

In diesem Fall muss sichergestellt werden, dass die Reifenmodule ihre Daten zu einer stationären Anfangsvorrichtung außerhalb des Fahrzeuges senden können. Ein anderes Problem besteht darin, dass der Energieverbrauch des Reifenmoduls relativ hoch sein kann und die Lebensdauer der Batterie im Reifenmodul begrenzt ist.

Der Erfindung liegt die Aufgabe zugrunde, ein Verfahren bereitzustellen, mit dem Reifendruckkontrollsysteme verbessert werden, wobei insb. die Lebenszeit der Reifenmodule wesentlich verlängert werden soll.

Gelöst wird die Aufgabe durch ein Verfahren nach Anspruch 1.

Ein Vorteil des Verfahrens besteht darin, dass mit dem Einsatz des neuen Verfahrens herkömmliche Reifendruckkontrollsysteme wesentlich verbessert werden.

Der Nutzer, beispielsweise der Flottenbetreiber für Nutzfahrzeuge, hat über die Konfigurationseinstellungen am Reifenmodul die Möglichkeit, die Lebensdauer der Batterie des Reifenmoduls zu beeinflussen und optimal auf seine Bedürfnisse abzustimmen. Für den Fall, dass der Nutzer eine möglichst lange Lebensdauer für die Batterie des Reifenmoduls wünscht, kann er z.B. über ein Smartphone und eine entsprechende Software die entsprechenden Einstellungen am Reifenmodul vornehmen. Er könnte z.B. die Einstellung vornehmen, dass die bidirektionale Schnittstelle in Form einer Bluetooth-Verbindung komplett deaktiviert wird. In diesem Fall würde der Nutzer nur über die unidirektionale Schnittstelle die Reifeneigenschaften von den Fahrzeugreifen erfassen können, beispielsweise den Reifendruck. Die relevanten Reifeneigenschaften werden dann jeweils beim Anhalten an einer stationären Empfangsvorrichtung empfangen und anschließend an den Flottenbetreiber weitergeleitet, oder durch ein installiertes On-Board TPMS System empfangen und verarbeitet.

Bei einer Aktivierung der bidirektionalen Schnittstelle ergeben sich hingegen eine Vielzahl von anderen Komfortfunktionen für den Nutzer. In diesem Fall kann beispielsweise der Fahrer mit seinem Smartphone, welches ebenfalls über eine Bluetooth-Schnittstelle verfügt, die Reifeneigenschaften über die Reifenmodule direkt abfragen. Beispielsweise kann er vor dem Fahrtantritt mit seinem Smartphone prüfen, ob alle Fahrzeugreifen den vorgegebenen Reifendruck besitzen. Flottenbetreiber, die keine stationären Empfangsvorrichtungen besitzen, können den Empfangsmodus für eine stationäre Empfangsvorrichtung komplett deaktivieren, indem sie die Zeitdauer auf 0 Sekunden setzen. Dadurch kann die Lebensdauer für die Batterie wesentlich verlängert werden. Flottenbetreiber, die hingegen ausschließlich mit einer stationären Empfangsvorrichtung arbeiten, können hingegen das Senden von Signalen vom Reifenmodul während der Fahrt komplett deaktivieren, wodurch sich die Lebensdauer der Batterie ebenfalls beträchtlich erhöhen kann. Alle durch den Nutzer eingestellten Konfigurationen für das Reifenmodul werden später automatisiert durch das Reifenmodul umgesetzt. Insb. wird die Bluetooth-Schnittstelle deaktiviert, wenn ein Sensor im Reifen detektiert, dass sich ein Fahrzeugreifen im Bewegungsmodus befindet und eine vorgegebene Fahrtgeschwindigkeit überschreitet.

Da Reifenmodule in einer Massenproduktion hergestellt werden, und eine individuelle Programmierung für bestimmte Einsatzgebiete logistisch nicht vertretbar ist, werden alle Reifenmodule mit einer allgemeinen Programmierung produziert, die den optimalsten Ablauf für alle Einsatzgebiete darstellt. Damit ist aber auch die erzielbare Batterielaufzeit an einen Kompromiss geknüpft.

Für die Situation, dass das Fahrzeug, insbesondere ein Nutzfahrzeug mit einem Nutzfahrzeuganhänger, keine eigene Sende- und Empfangseinheit aufweist, wird eine regelmäßige Überwachung der Fahrzeugreifen an einer Basisstation mit einer Empfangseinheit bzw. stationären Empfangsvorrichtung durchgeführt. In diesem Fall sollte der Nutzer den Empfangsmodus für die stationären Empfangsvorrichtung aktivieren, in dem er eine Zeitdauer von z.B. 4 Minuten für den Empfangsmodus vorgibt.

Immer wenn das Fahrzeug mit den Fahrzeugreifen, die Reifenmodule aufweisen, an der Basisstation vorbeifährt oder im Bereich der Basisstation parkt, können die jeweiligen Daten der Reifenmodule des Fahrzeugreifens durch die Empfangsvorrichtung empfangen werden.

Mit dem neuen Verfahren wird sichergestellt, dass das Fahrzeug nicht zu lange neben der Empfangsvorrichtung stehen bleiben muss, um die Daten der jeweiligen Reifenmodule zu erfassen. Im Empfangsmodus für die stationäre Empfangsvorrichtung sendet das Reifenmodul mit einer höheren Sendehäufigkeit als das im Fahrtmodus oder im Parkmodus der Fall ist. Dadurch ist es ausreichend, dass das Fahrzeug nur kurzzeitig neben der Empfangsvorrichtung stehen bleibt, damit alle Daten von den Reifenmodulen übertragen werden können.

In einer weiteren vorteilhaften Weiterbildung der Erfindung ist vorgesehen, dass bei Fahrzeugen mit Reifenmodulen, deren Signale nur von einer stationären Empfangsstation erfasst werden können, die Reifenmodule so konfiguriert werden, dass diese während der Fahrt keine Signale emittieren und dadurch beträchtliche Energieeinsparungen aufweisen können, wodurch sich die Lebenszeit dieser Module erheblich verlängert.

Es ist vorgesehen, dass die Bi-Direktionalen Verbindung eine Bluetooth-Verbindung umfasst, die bei einer vorgegebenen Fahrtgeschwindigkeit automatisiert deaktiviert wird.

Im Fahrtmodus des Fahrzeuges wird im Normalfall die Bluetooth-Schnittstelle nicht benötigt. Durch die Deaktivierung der Bluetooth-Schnittstelle kann die Batterielebensdauer wesentlich verlängert werden.

In einer weiteren vorteilhaften Weiterbildung der Erfindung ist vorgesehen, dass die Bluetooth-Verbindung im Reifenmodul erst beim Übergang von einem Empfangsmodus für die stationäre Empfangsvorrichtung in einen Interim-Modus aktiviert wird.

Dadurch wird die Bluetooth-Verbindung erst wieder aktiviert, wenn der Nutzer sie im Normalfall wiederverwenden würde.

In einer weiteren vorteilhaften Weiterbildung der Erfindung ist vorgesehen, dass bei der Einstellung der Konfiguration zusätzlich eingestellt werden kann, dass die Bluetooth-Verbindung in einem speziellen Betriebsmodus aktiviert oder deaktiviert sein soll.

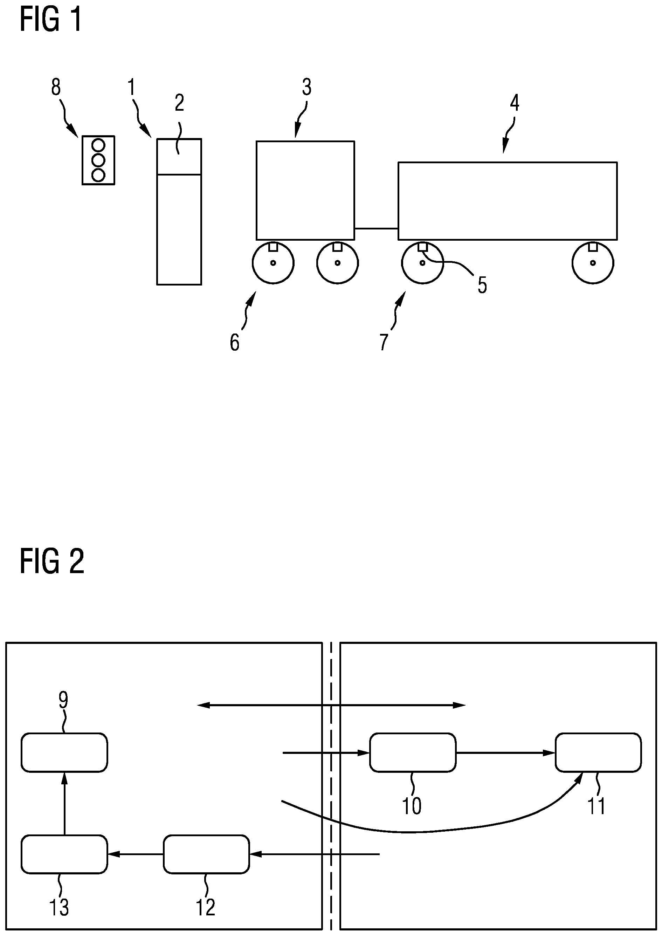

In der Figur 2 sind bei den unterschiedlichen Betriebsmodi ein Bluetooth-Symbol aufgeführt. Nur bei diesen Betriebsmodi, beispielsweise im Parkmodus, sollte die Bluetooth-Verbindung aktiviert werden können.

In einer weiteren vorteilhaften Weiterbildung der Erfindung ist vorgesehen, dass der Inhalt der vom Reifenmodul gesendeten Bluetooth-Advertising Frames für die Bluetooth-Verbindung einstellbar ist.

In einer weiteren vorteilhaften Weiterbildung der Erfindung ist vorgesehen, dass mit den Bluetooth-Advertising Frames entweder keine Daten vom Reifenmodul, nur die wichtigsten Daten vom Reifenmodul oder alle Daten des Reifenmoduls übertragen werden.

In einer weiteren vorteilhaften Weiterbildung der Erfindung ist vorgesehen, dass die Sendehäufigkeit der Bluetooth-Advertising Frames für die Bluetooth-Verbindung einstellbar ist, wobei die Sendehäufigkeit zwischen 1 und 32 Sekunden, vorzugsweise 4, 8, 16 oder 32 Sekunden, beträgt.

In einer vorteilhaften Weiterbildung der Erfindung ist vorgesehen, dass die Sendehäufigkeit im Empfangsmodus für eine stationäre Empfangsvorrichtung zwischen 2 und 32 Sekunden, vorzugsweise bei ca. 16 Sekunden liegt.

Diese Sendehäufigkeit ist deutlich kürzer, als die Sendehäufigkeit im Fahrtmodus, die bei ca. 128 Sekunden liegen kann. Bei dieser Sendehäufigkeit wird gewährleistet, dass das Fahrzeug nur kurzzeitig neben der Empfangsvorrichtung stehen bleiben muss.

In einer weiteren vorteilhaften Weiterbildung der Erfindung ist vorgesehen, dass die Zeitdauer des Empfangsmodus für die stationäre Empfangsvorrichtung als Voreinstellung ca. 4 Minuten beträgt.

Bei dieser Voreinstellung ist es im Normalfall ausreichend, wenn das Fahrzeug kurzzeitig neben der Empfangsvorrichtung stehen bleibt, damit alle Daten sicher übertragen werden können.

In einer weiteren vorteilhaften Weiterbildung der Erfindung ist vorgesehen, dass die Zeitdauer des Empfangsmodus für die stationäre Empfangsvorrichtung manuell auf den Wert von 0 Minuten gesetzt werden kann.

Diese Einstellung ist insbesondere vorteilhaft, wenn der Flottenbetreiber keine Empfangsvorrichtungen für die Fahrzeuge bereitstellen kann.

In einer weiteren vorteilhaften Weiterbildung der Erfindung ist vorgesehen, dass die Zeitdauer des Empfangsmodus für die stationäre Empfangsvorrichtung manuell auf den Wert von ca. 2 Minuten gesetzt werden kann.

Dieser Wert für die Zeiteinstellung ist dann vorteilhaft, wenn die Empfangsvorrichtung z. B. direkt am Eingangstor des Flottenbetreibers stationiert ist.

In einer weiteren vorteilhaften Weiterbildung der Erfindung ist vorgesehen, dass die Zeitdauer für die Aktivierung des Empfangsmodus für die stationäre Empfangsvorrichtung manuell auf den Wert von ca. 8 Minuten gesetzt werden kann. Diese Einstellung kann vorteilhaft sein, wenn sich die Empfangsvorrichtung im hinteren Bereich des Betriebshofes befindet. In diesem Fall wird das Fahrzeug mit einer verminderten Geschwindigkeit nach einer bestimmten Zeit in der Regel die Empfangsvorrichtung erreichen.

In einer weiteren vorteilhaften Weiterbildung der Erfindung ist vorgesehen, dass die Reifenmodule jeweils 2 µ-Controller aufweisen, wobei der erste µ-Controller für das Senden von Hochfrequenz-Telegrammen und der zweite µ-Controller für die Bluetooth-Kommunikation eingesetzt wird.

Dadurch können die unterschiedlichen Funktionen getrennt voneinander gesteuert und geregelt werden.

In einer weiteren vorteilhaften Weiterbildung der Erfindung ist vorgesehen, dass die Sensoren im Reifenmodul zur Erfassung von Reifeneigenschaften zumindest einen Reifendrucksensor und einen Temperatursensor umfassen. Diese Reifeneigenschaften sind besonders wichtig, um entsprechende Fehlermeldungen an den Fahrer weiterzugeben.

In einer weiteren vorteilhaften Weiterbildung der Erfindung ist vorgesehen, dass die Basisstation am Einfahrtstor eines Flottenbetreibers angeordnet ist, damit die Maximaltemperaturen regelmäßig erfasst werden können.

In der Regel werden alle Nutzfahrzeuge eines Flottenbetreibers in regelmäßigen Abständen durch das Eingangstor des Flottenbetreibers fahren.

Wenn das Eingangstor ebenfalls eine Schranke aufweist, ist sichergestellt, dass das Fahrzeug in der Nähe der Basisstation kurzzeitig anhalten wird.

Anhand eines Ausführungsbeispiels soll die Erfindung näher erläutert werden. Es zeigt:
- Fig. 1:: ein Zugfahrzeug mit einem NFZ-Anhänger
- Fig. 2:: einen Wechsel zwischen den einzelnen Betriebsmodi für das Reifenmodul.

Die Fig. 1 zeigt ein Ausführungsbeispiel.

Es ist schematisch eine Nutzfahrzeugzugmaschine und ein Nutzfahrzeuganhänger dargestellt. Die Nutzfahrzeugzugmaschine 3 und der Nutzfahrzeuganhänger 4 weisen jeweils eine Vielzahl von Fahrzeugreifen 6 und 7 auf, die mit Reifenmodulen ausgestattet sind. Die Reifenmodule 5 sind auf der Reifeninnenseite angeordnet und können mit entsprechenden Sensoren den Reifendruck und die Reifentemperatur sowie eine Beschleunigung messen.

Weder die Zugmaschine 3 noch der Anhänger 4 besitzen bei diesem Ausführungsbeispiel eine eigene Sende- und Empfangseinheit, um die Signale von den Reifenmodulen empfangen zu können. Das dargestellte Nutzfahrzeug ist beispielsweise ein Nutzfahrzeug eines Flottenbetreibers. Das Fahrzeug fährt in regelmäßigen Abständen an der Basisstation bzw. stationären Empfangsvorrichtung 1 des Flottenbetreibers vorbei.

Die Basisstation 1 könnte beispielsweise am Einfahrtstor des Flottenbetreibers installiert sein. Die Basisstation 1 besitzt eine Empfangseinheit 2, mit der insbesondere die Signale von den Reifenmodulen 5 automatisiert empfangen werden können.

Sobald das Fahrzeug in der Nähe der Basisstation 1 und der Empfangseinheit 2 anhält, empfängt die Empfangseinheit 2 die Identifikations-Codes von den einzelnen Reifenmodulen 5.

Die Fig. 2 zeigt ein Ausführungsbeispiel für den Wechsel zwischen unterschiedlichen Betriebsmodi.

Der Stillstandmodus für ein Reifenmodul umfasst den Parkmodus 9 und den Interim-Modus 13 auf der linken Seite der Figur.

Der Bewegungsmodus für ein Reifenmodul umfasst den Ersten Block-Modus 10 und den Fahrt-Modus 11 auf der rechten Seite der Figur.

Über einen Sensor im Reifenmodul wird die Fahrtgeschwindigkeit des Fahrzeugreifens bzw. des Fahrzeuges ermittelt.

Erst wenn mit dem Beschleunigungssensor eine bestimmte Geschwindigkeit ermittelt wurde, wechselt das Reifenmodul in einen Ersten Block-Modus 10 oder den Fahrt-Modus 11.

Zunächst befindet sich das Fahrzeug im Parkmodus 9. Der Fahrer startet das Fahrzeug und fährt los. Sensoren der Reifenmodule detektieren die Bewegung des Fahrzeuges. Die Sendehäufigkeit für die Reifenmodule liegt beim ersten Block-Modus bei ca. 16 Sekunden. Nach einer bestimmten Bewegungsdauer für das Fahrzeug wechselt die Sendehäufigkeit für die Reifenmodule in den Fahrtmodus 11. Im Fahrtmodus 11 liegt die Sendehäufigkeit bei einer reduzierten Sendehäufigkeit von ca. 128 Sekunden. Nachdem mit den Sensoren ein Stillstand des Fahrzeuges detektiert wurde, wechselt die Sendehäufigkeit für die Reifenmodule in den Empfangsmodus für eine stationäre Empfangsvorrichtung. In diesem Modus 12 ist die Sendehäufigkeit wesentlich höher als die Sendehäufigkeit im Fahrtmodus. Dadurch wird die erforderliche Haltezeit neben der Empfangsvorrichtung wesentlich reduziert. Nach dem Empfangsmodus 12 wechselt die Sendehäufigkeit in den Interim-Modus 13. Bei diesem Modus liegt die Sendehäufigkeit bei ca. 128 Sekunden. Die Sendehäufigkeit ist geringer als im Empfangsmodus 12. Wenn der Stillstand des Fahrzeuges länger als 15 Minuten vorliegt, wechselt die Sendehäufigkeit wieder zurück in den Parkmodus 9. Im Normalfall hat der Fahrer das Fahrzeug in diesem Fall geparkt und ausgeschaltet.

Die Reifenmodule, nachfolgend auch mit der Bezeichnung TTM abgekürzt, haben unterschiedliche Betriebsmodi, die in der Fig. 2 dargestellt sind:
- MP: Mode Park (TTM ist im Stillstand - Parkmodus)
- MFB: ModeFirstBlock bzw. Erster Block-Modus: TTM ist in Bewegung (Beginn einer Fahrt)
- MD: Mode Drive bzw. Fahrtmodus (TTM ist in Bewegung)
- MYR: Mode Yard Reader bzw. Empfangs-Modus für eine stationäre Empfangsvorrichtung: Wenn das TTM zum Stillstand kommt, verweilt das TTM in MYR, bevor es in MI wechselt
- MI: Mode Interim bzw. Interim-Modus: Wenn der MYR beendet ist, wechselt das TTM in MI, verweilt in diesem Modus, bis es in MP wechselt. Die Sendehäufigkeit des TTM im

MYR ist höher als im MI (16s statt 128s).

Der MYR wird eingeführt, um die Verweildauer an einem stationären Empfänger bzw. stationäre Empfangsvorrichtung (YRS = Yard Reader Station) zu verkürzen. Die YRS wird verwendet, wenn an einem Fahrzeug nur TTMs verwendet werden und keine Empfangseinheit. In diesem Fall können dann die Sensordaten von der YRS ausgelesen werden. Die YRS kann z.B. an Tankstellen oder Betriebshöfen installiert sein. Das Fahrzeug soll kurzzeitig neben der YRS stehen bleiben, bis die Daten aller TTMs übertragen wurden. Das TTM sendet nur in festen zeitlichen Abständen sein HF-Telegramm und kann z.B. nicht vom YRS aktiv nach seinen Daten abgefragt werden. Deshalb muss das Fahrzeug eine definierte Zeit neben der YRS stehen bleiben.

Die Sendehäufigkeit des TTM hat einen signifikanten Einfluss auf seine Lebensdauer bzw. auf die Lebensdauer der Batterie. Als optimale Einstellung in Bezug auf Datenverfügbarkeit am Empfänger und TTM-Lebensdauer ergibt sich eine Senderate von 128 Sekunden. Im MI sendet das TTM alle 128 Sekunden seine Daten. Sobald der MYR aktiviert ist, sendet das TTM alle 16 Sekunden seine Daten. Damit ist eine deutlich kürzere Verweildauer des Fahrzeuges an der YRS möglich. Das TTM wechselt in den MYR, wenn das Fahrzeug aus der Bewegung kommend (MFB oder MD) stehen bleibt oder sich sehr langsam bewegt (< 15km/h).

Neben den periodischen Funktelegrammen (433 MHz) sendet das TTM auch periodisch Bluetooth Telegramme (auf 2,4 GHz, im Folgenden mit BT bezeichnet). Diese periodischen BT-Telegramme sind sogenannte Advertising Frames. Diese Frames sind gemäß dem BT-Core Standard nicht an einen bestimmten Empfänger adressiert, und können von jedem BT-Gerät empfangen werden. Sie sind z.B. notwendig, um eine Verbindung zwischen dem BT-Gerät und dem TTM zu etablieren, und so einen Punkt zu Punkt Kommunikationskanal aufzubauen (Connected Mode).

Um Energie zu sparen, sind diese Advertising Frames so kurz wie möglich. Man kann jedoch auch zusätzliche Daten, wie Druck, Temperatur, Batteriestatus des TTMs, etc. in den Advertising Frames übertragen. Der Vorteil ist, dass der Nutzer die Daten verfügbar hat, ohne sich mit dem TTM verbinden zu müssen, und die Einrichtung einer Verbindung und deren Aufrechthaltung zudem sehr energieintensiv ist.

Der Nachteil ist, dass der Energiebedarf hierfür größer ist, und dass die Daten im größten Teil der Sendezeit nicht verarbeitet werden, da sich kein Empfänger in der Nähe befindet.

Das Versenden von Telegrammen, gleich ob über 433 MHz oder über 2,4 GHz (BT) kostet Energie und ist im Vergleich zu normalen Rechenoperationen energieintensiver.

Als Daumenformel gilt:
- Je länger das Funktelegram (433 MHz oder 2,4 GHz) desto größer der Energiebedarf.
- Je häufiger man sendet (z.B. statt jede 128s, in manchen Modi alle 16s), desto größer der Energiebedarf.

Beim TTM wird ein erster µ-Controller für die Sensor-Messungen und das Senden der HF-Telegramme genutzt (HF: Hochfrequenz). Ein zweiter µ-Controller des TTM wird für die BT-Kommunikation eingesetzt.

Das Betreiben von 2 µ-Controllern benötigt mehr Energie als das Betreiben von nur einem µ-Controller.

Um bei einer YRS die Verweilzeit zu verkürzen, wird der MYR eingeführt.

Bei Reifenmodulen, die den MYR nicht haben, würden alle 128s ein HF-Telegramm gesendet, wenn das Fahrzeug, stehen bleibt oder langsamer fährt (< 15 km/h). Es wechselt gleich in den Mode MI. Bei den neuen Reifenmodulen bzw. TTMs wechseln diese bei einem Stillstand oder bei einer langsamen Bewegung zunächst in den MYR.

Im MYR sendet das TTM alle 16 Sekunden. Die Standarddauer für die Aktivierund des MYR sind 4 Minuten.

Das TTM wechselt bei jedem Stopp in den MYR, unabhängig davon, ob es neben einer YRS steht oder nicht. Es wechselt also bei jedem Anhalten, insb. an der Ampel oder bei einem Stau. Dies führt zu einem erhöhten Energieverbrauch.

Die BT-Schnittstelle wurde gemäß dem BT-Core Standard implementiert, damit es mit jedem BT-fähigen Gerät kommunizieren kann. Das TTM sendet Advertising Frames, um sich für andere BT-Geräten erkennbar zu geben. Der Nutzer kann sich über ein anderes BT-Endgerät mit dem TTM über BT verbinden, um Inhalte aus dem TTM zu lesen, oder um Inhalte auf das TTM zu schreiben. Diese Bi-Direktionale Schnittstelle ist wesentlich performanter und leistungsstärker als eine konventionelle HF-Schnittstelle und bietet viele Optionen für zukünftige Anwendungen.

Der BT-chip kann die komplette Zeit aktiv sein. Dies verbraucht jedoch relativ viel Energie. Der BT-chip und damit auch die BT-Kommunikation wird bei einem sich bewegendem TTM deaktiviert, um Energie zu sparen.

Da das Aktivieren (Hochfahren) des BT-chips Energie kostet, wird der BT-Chip erst zum Übergang vom MYR in MI aktiviert. Damit wird sichergestellt, dass der BT-Chip nicht unnötiger Weise bei jedem kurzen Stopp, z.B. an der Ampel, aktiviert wird.

Die Dauer des MYR ist für den Kunden einstellbar. Einstellmöglichkeiten sind 0 min, 2 min, 4 min oder 8 min. Bei einer Einstellung von 0 min bedeutet das, dass der MYR deaktiviert ist und dass TTM dann bei jedem Anhalten sofort in den MI wechselt.

Die Sendehäufigkeit im MYR ist über eine Software einstellbar.

### 0 Minuten-Einstellung:

Dies ist für Kunden gedacht, die keine YRS haben. Damit wird Energie gespart, da das TTM bei jedem Stillstand nur jede 128s und nicht jede 16s HF-Telegramme sendet. Ist Bluetooth aktiviert, wird diese Energieersparnis gemindert, da dann der BT-Chip und die BT-Kommunikation eingeschaltet wird, das zusätzlichen Energiebedarf zur Folge hat.

### 2 Minuten-Einstellung:

Dies ist für Kunden gedacht, die eine YRS haben, welche so positioniert ist, dass sie vom Fahrzeug direkt angefahren werden kann, z.B. an der Einfahrt zum Betriebsgelände oder an einer Tankstelle. Hier reicht es aus, wenn der MYR nur 2 min andauert.

Je nach Energiebedarf für das Aktivieren des BT-chips, kann es aus Sicht der Energiebilanz besser sein, den MYR auf 2 min einzustellen, anstatt ganz auszuschalten.

### 4 und 8 Minuten-Einstellung:

Dies ist für Kunden gedacht, die eine YRS haben, diese auf dem Betriebsgelände jedoch nicht direkt angefahren werden kann. Das Fahrzeug muss für eine gewisse Zeit im Schritttempo (<15km/h) sich auf die YRS zubewegen. Wenn das Fahrzeug dann die YRS erreicht hat, sendet das TTM immer noch jede 16s die HF-Tele-gramme und das Fahrzeug muss nur kurz neben der YRS verweilen. Je länger der MYR dauert, desto mehr Energie wird verbraucht.

Der Inhalt der BT Advertising Frames ist einstellbar.

### Keine Daten:

Das Advertising Frame wird nur zum Aufbau der BT-Verbindung genutzt. Dies ist die Energie sparsamste Variante. Zum einen, weil die Advertising Frames sehr kurz sind. Zum anderen, weil keine Messwerte zwischen den beiden µ-Kontrollern im TTM kommuniziert werden müssen.

Der erste µ-Controller für das Senden der HF-Telegramme steuert und prozessiert auch die Messungen des Druck-, Temperatur- und Beschleunigungssensors. Der zweite µ-Controller steuert hingegen die BT-Kommunikation.

Dafür muss sich der Nutzer immer mit einem TTM über BT verbinden, um die für ihn interessanten Daten auszulesen. Dies erfordert mehr Zeit.

Nur Sensor-Daten-Übertragung:
In den Advertising Frame werden z.B. nur Druck und Temperatur übertragen. Dies erfordert mehr Energie, da das Advertising Frame um die Sensor-Daten länger ist. Dafür ist keine spezielle Interaktion des Nutzers mit dem TTM notwendig, um die TPMS-Daten zu erhalten. Er muss mit seinem BT-Endgerät nur empfangen und hat mit dem Empfang der Advertising Frames die Sensor-Daten automatisch verfügbar.

### Alle TTM relevanten Daten:

In dem Advertising Frame werden alle TTM relevanten Daten übertragen, nicht nur z.B. nur Druck und Temperatur, sondern auch z.B. die Laufleistung des TTMs, der Batteriestatus und andere Daten. Dies erfordert am meisten Energie, da das Advertising Frame um diese TTM-Daten länger ist.

Dafür ist jedoch keine spezielle Interaktion des Nutzers mit dem TTM notwendig, um die TTM-Daten zu erhalten.

Der Nutzer muss sein BT-Endgerät nur in den Empfangsmodus stellen und hat mit dem Empfang der Advertising Frames alle relevanten TTM Daten automatisch verfügbar.

Die Sendehäufigkeit der BT Advertising Frames ist einstellbar.

Je häufiger die Advertising Frames gesendet werden, desto schneller erhält der Nutzer die gewünschten Daten. Umgekehrt steigt der Energieverbrauch, je häufiger die Advertising Frames gesendet werden.

Die Einstellmöglichkeiten sind: 4s, 8s, 16s, 32s.

Dies ist pro Mode (also MYR, MI, MP, etc.) unterschiedlich einstellbar.

Bei einem Fahrzeug mit 12 TTMs macht es einen Unterschied, ob die Daten alle 4s oder alle 32s gesendet werden.

Das Szenario hierfür ist, dass an dem Fahrzeug sind TTMs verbaut, keine Empfangseinheiten. Der Fahrer geht mit einem BT-fähigen Handy entweder zu Beginn seiner Fahrt oder am Ende seiner Fahrt von Reifen zu Reifen, um die TTM Daten auszulesen. Eine 4s - Sendehäufigkeit macht es sehr komfortabel für den Fahrer, da er nur sehr kurz am Reifen warten muss, bis er die Daten empfangen hat. Bei 32s ist dieser Vorgang für den Fahrer deutlich unkomfortabler.

### Aktivierung / Deaktivierung von BT.

Generell: Für Kunden, die BT nicht nutzen wollen, besteht die Möglichkeit, die BT-Kommunikation (Advertising Frames) gänzlich auszuschalten und so deutlich Energie sparen. Ist der BT-Chip für diesen Betriebsmodus auch zum Prozessieren von internen Daten nicht notwendig, kann mit dieser Einstellung der BT-chip komplett deaktiviert werden, was das größte Energiesparpotential bereithält. Damit können diese Kunden die Batterielebensdauer signifikant erhöhen.

### Für einzelne Modi:

Der Nutzer kann festlegen, in welchem der TTM Modi (MP, MI, MYR) BT-Kommunikation aktiv ist. Z.B. BT nur im MYR aktiv ist. Mögliches Szenario: Der Fahrer prüft nur am Ende der Fahrt den TTM Status mit einem BT-fähigen Handy.

Je nach Nutzungsprofil, kann BT für die einzelnen Modi aktiviert oder deaktiviert werden. Auch Cluster sind möglich. Nur die Modi, bei den das TTM im Stillstand ist, etc.

Alle oben genannten Einstellungen sind frei kombinierbar. So kann der Anwender sein persönliches und auf seine Applikation am besten zugeschnittenen Nutzungsprofil im TTM einstellen, um den besten Kompromiss aus TTM-Funktionen und TTM-Lebensdauer zu erwirken.

Die Einstellungen sind über beide Schnittstellen möglich, per HF-Schnittstelle als auch per BT-Schnittstelle, z.B. mit einem Smartphone, um den Anwendern die freie Wahl anzubieten.

### Bezugszeichenliste

- 1: Basisstation
- 2: Stationäre Empfangseinheit
- 3: Zugmaschine
- 4: NFZ-Anhänger
- 5: Reifenmodul bzw. TTM
- 6: Fahrzeugreifen der Zugmaschine
- 7: Fahrzeugreifen des NFZ-Anhängers
- 8: Ampel
- 9: Parkmodus
- 10: Erster Block-Modus
- 11: Fahrtmodus
- 12: Empfangsmodus für stationäre Emfpangsvorrichtung
- 13: Interim-Modus

## Patentansprüche

1. Verfahren zur Überwachung von Reifeneigenschaften von Fahrzeugreifen (6,7) an einem Fahrzeug (3),
mit mindestens den folgenden Schritten,
a) Bereitstellen von Fahrzeugreifen (6,7) mit einer Vielzahl von Reifenmodulen (5) an einem Fahrzeug,
wobei die Reifenmodule (5) jeweils zumindest einen Sensor für die Messung von Reifeneigenschaften aufweisen,
wobei die Reifenmodule (5) eine Bi-Direktionale Schnittstelle zum Senden und Empfangen von Daten aufweisen,
b) Einstellen einer Konfiguration für das Reifenmodul (5) durch einen Nutzer mit einer Bi-Direktionalen oder mit einer Uni-Direktionalen Schnittstelle auf einem Datenspeicher im Reifenmodul (5), wobei mit der Konfiguration zumindest die Zeitdauer für einen
Empfangsmodus (12) für eine stationäre Empfangsvorrichtung (8) und/oder die Aktivierung einer Bi-Direktionalen Verbindung
und/oder die Deaktivierung von Senden von Signalen während der Fahrtmodi (10) und (11) eingestellt werden kann,
wobei mit den Einstelloptionen der Energieverbrauch für das Reifenmodul (5) optimal an die Erfordernisse des Nutzers angepasst werden können,
c) Starten und Bewegen des Fahrzeuges,
wobei die Bewegung, die Fahrzeuggeschwindigkeit und das Anhalten der Fahrzeugreifen (6,7) mit einem Sensor im Reifenmodul (5) detektiert werden, wobei nach der Bewegungsanalyse der Fahrzeugreifen (6,7) die am Reifenmodul (5) eingestellten Funktionen automatisiert umgesetzt werden, **dadurch gekennzeichnet, dass**
die Bi-Direktionalen Verbindung eine Bluetooth-Verbindung umfasst, die bei einer vorgegebenen Fahrtgeschwindigkeit automatisiert deaktiviert wird.

2. Verfahren nach einem der vorhergehenden Ansprüche,
**dadurch gekennzeichnet, dass**
die Bluetooth-Verbindung im Reifenmodul (5) erst beim Übergang von einem Empfangsmodus (12) für die stationäre Empfangsvorrichtung in einen Interim-Modus (13) aktiviert wird.

3. Verfahren nach einem der vorhergehenden Ansprüche,
**dadurch gekennzeichnet, dass**
bei der Einstellung der Konfiguration zusätzlich eingestellt werden kann, dass die Bluetooth-Verbindung in einem speziellen Betriebsmodus aktiviert oder deaktiviert sein soll.

4. Verfahren nach einem der vorhergehenden Ansprüche,
**dadurch gekennzeichnet, dass**
der Inhalt der vom Reifenmodul (5) gesendeten Bluetooth-Advertising Frames für die Bluetooth-Verbindung einstellbar ist.

5. Verfahren nach einem der vorhergehenden Ansprüche,
**dadurch gekennzeichnet, dass**
mit den Bluetooth-Advertising Frames entweder keine Daten vom Reifenmodul (5), nur die wichtigsten Daten vom Reifenmodul (5) oder alle Daten des Reifenmoduls (5) übertragen werden.

6. Verfahren nach einem der vorhergehenden Ansprüche,
**dadurch gekennzeichnet, dass**
die Sendehäufigkeit der Bluetooth-Advertising Frames für die Bluetooth-Verbindung einstellbar ist,
wobei die Sendehäufigkeit zwischen 1 und 64 Sekunden, vorzugsweise 4, 8, 16 oder 32 Sekunden, beträgt.

7. Verfahren nach einem der vorhergehenden Ansprüche,
**dadurch gekennzeichnet, dass**
die Sendehäufigkeit im Empfangsmodus (12) für eine stationäre Empfangsvorrichtung zwischen 2 und 128 Sekunden, vorzugsweise bei ca. 16 Sekunden liegt.

8. Verfahren nach einem der vorhergehenden Ansprüche,
**dadurch gekennzeichnet, dass**
die Zeitdauer des Empfangsmodus (12) für die stationäre Empfangsvorrichtung als Voreinstellung ca. 4 Minuten beträgt.

9. Verfahren nach einem der vorhergehenden Ansprüche,
**dadurch gekennzeichnet, dass**
die Zeitdauer des Empfangsmodus (12) für die stationäre Empfangsvorrichtung manuell oder automatisiert auf den Wert von 0 Minuten gesetzt werden kann.

10. Verfahren nach einem der vorhergehenden Ansprüche,
**dadurch gekennzeichnet, dass**
die Zeitdauer des Empfangsmodus (12) für die stationäre Empfangsvorrichtung manuell oder automatisiert auf den Wert von ca. 2 Minuten gesetzt werden kann.

11. Verfahren nach einem der vorhergehenden Ansprüche,
**dadurch gekennzeichnet, dass**
die Zeitdauer des Empfangsmodus (12) für die stationäre Empfangsvorrichtung manuell oder automatisiert auf den Wert von ca. 8 Minuten gesetzt werden kann.

12. Verfahren nach einem der vorhergehenden Ansprüche,
**dadurch gekennzeichnet, dass**
der Bewegungsmodus aus zwei Modi besteht, einem Ersten Block-Modus (10) mit erhöhter Sendehäufigkeit und einem Fahrt-Modus (11) mit reduzierter Sendehäufigkeit.

13. Verfahren nach einem der vorhergehenden Ansprüche,
**dadurch gekennzeichnet, dass**
der Stillstandmodus aus zwei Modi besteht, einem Parkmodus (9) und einem Interim-Modus (13),
wobei das Reifenmodul (5) aus beiden Modi in den Bewegungsmodus (10, 11) wechselt, wenn das Reifenmodul (5) eine Bewegung des Fahrzeugreifens detektiert
oder wobei das Reifenmodul (5) vom Interim-Modus (13) in den Parkmodus (9) wechselt, wenn in einer vorgegebenen Zeitdauer das Reifenmodul (5) keine Bewegung des Fahrzeugreifens detektiert.

14. Verfahren nach einem der vorhergehenden Ansprüche,
**dadurch gekennzeichnet, dass**
die Reifenmodule (5) jeweils 2 µ-Controller aufweisen,
wobei der erste µ-Controller für das Senden von Hochfrequenz-Telegrammen und der zweite µ-Controller für die Bluetooth-Kommunikation eingesetzt wird.

## Claims

1. Method for monitoring tyre properties of vehicle tyres (6, 7) on a vehicle (3), comprising at least the following steps,
a) providing vehicle tyres (6, 7) with a large number of tyre modules (5) on a vehicle,
wherein the tyre modules (5) each have at least one sensor for measuring tyre properties,
wherein the tyre modules (5) have a bidirectional interface for sending and receiving data,
b) a user setting a configuration for the tyre module (5) by way of a bidirectional or a unidirectional interface on a data memory in the tyre module (5),
wherein, using the configuration, at least the time period for a receiving mode (12) for a stationary receiving device (8) and/or the activation of a bidirectional connection
and/or the deactivation of the sending of signals during driving modes (10) and (11) can be set,
wherein the energy consumption for the tyre module (5) can be adapted optimally to the user's requirements using the setting options,
c) starting and moving the vehicle,
wherein the movement, the vehicle speed and the stopping of the vehicle tyres (6, 7) are detected by a sensor in the tyre module (5), wherein, after the movement analysis of the vehicle tyres (6, 7), the functions set at the tyre module (5) are implemented automatically, **characterized in that**
the bidirectional connection includes a Bluetooth connection that is deactivated automatically at a predefined driving speed.

2. Method according to one of the preceding claims,
**characterized in that**
the Bluetooth connection in the tyre module (5) is not activated until the transition from a receiving mode (12) for the stationary receiving device to an interim mode (13).

3. Method according to one of the preceding claims,
**characterized in that**
when setting the configuration, it is also possible to set the Bluetooth connection to be activated or deactivated in a specific operating mode.

4. Method according to one of the preceding claims,
**characterized in that**
the content of the Bluetooth advertising frames sent by the tyre module (5) can be set for the Bluetooth connection.

5. Method according to one of the preceding claims,
**characterized in that**
the Bluetooth advertising frames are used to transmit either no data from the tyre module (5), only the most important data from the tyre module (5) or all data from the tyre module (5).

6. Method according to one of the preceding claims,
**characterized in that**
the frequency of sending the Bluetooth advertising frames can be set for the Bluetooth connection,
wherein the frequency of sending is between 1 and 64 seconds, preferably 4, 8, 16 or 32 seconds.

7. Method according to one of the preceding claims,
**characterized in that**
the frequency of sending in the receiving mode (12) for a stationary receiving device is between 2 and 128 seconds, preferably about 16 seconds.

8. Method according to one of the preceding claims,
**characterized in that**
the time duration of the receiving mode (12) for the stationary receiving device is approximately 4 minutes as a default.

9. Method according to one of the preceding claims,
**characterized in that**
the time duration of the receiving mode (12) for the stationary receiving device can be set to the value of 0 minutes manually or automatically.

10. Method according to one of the preceding claims,
**characterized in that**
the time duration of the receiving mode (12) for the stationary receiving device can be set to the value of about 2 minutes manually or automatically.

11. Method according to one of the preceding claims,
**characterized in that**
the time duration of the receiving mode (12) for the stationary receiving device can be set to the value of about 8 minutes manually or automatically.

12. Method according to one of the preceding claims,
**characterized in that**
the movement mode consists of two modes, a first block mode (10) with an increased frequency of sending and a driving mode (11) with a reduced frequency of sending.

13. Method according to one of the preceding claims,
**characterized in that**
the standstill mode consists of two modes, a parking mode (9) and an interim mode (13),
wherein the tyre module (5) switches from both modes to movement mode (10, 11) when the tyre module (5) detects movement of the vehicle tyre or wherein the tyre module (5) changes from interim mode (13) to parking mode (9) if the tyre module (5) does not detect any movement of the vehicle tyre within a specified time period.

14. Method according to one of the preceding claims,
**characterized in that**
the tyre modules (5) each have 2 microcontrollers,
wherein the first microcontroller is used for sending high-frequency telegrams and the second microcontroller is used for Bluetooth communication.

## Revendications

1. Procédé permettant de surveiller des propriétés de pneu des pneus de véhicule (6, 7) sur un véhicule (3),
comprenant au moins les étapes suivantes consistant à
a) fournir des pneus de véhicule (6, 7) munis d'une pluralité de modules de pneu (5) sur un véhicule,
dans lequel les modules de pneu (5) présentent respectivement au moins un capteur pour mesurer des propriétés de pneu,
dans lequel les modules de pneu (5) présentent une interface bidirectionnelle pour émettre et recevoir des données,
b) régler une configuration pour le module de pneu (5) par un utilisateur à l'aide d'une interface bidirectionnelle ou unidirectionnelle dans une mémoire de données dans le module de pneu (5),
dans lequel la configuration permet de régler au moins la durée d'un mode réception (12) pour un dispositif de réception stationnaire (8) et/ou l'activation d'une liaison bidirectionnelle
et/ou la désactivation de l'émission de signaux pendant les modes conduite (10) et (11),
dans lequel les options de réglage permettent d'adapter de façon optimale la consommation d'énergie pour le module de pneu (5) aux besoins de l'utilisateur,
c) démarrer et déplacer le véhicule,
dans lequel le déplacement, la vitesse du véhicule et l'arrêt des pneus de véhicule (6, 7) sont détectés par un capteur dans le module de pneu (5), dans lequel après l'analyse de déplacement des pneus de véhicule (6, 7) les fonctions réglées sur le module de pneu (5) sont mises en œuvre de manière automatisée, **caractérisé en ce que**
la liaison bidirectionnelle comprend une liaison Bluetooth qui est désactivée de manière automatisée à une vitesse de conduite prédéfinie.

2. Procédé selon l'une quelconque des revendications précédentes,
**caractérisé en ce que**
la liaison Bluetooth dans le module de pneu (5) n'est activée qu'au passage d'un mode réception (12) pour le dispositif de réception stationnaire à un mode intérimaire (13).

3. Procédé selon l'une quelconque des revendications précédentes,
**caractérisé en ce que**
lors du réglage de la configuration, il est également possible de régler le fait que la liaison Bluetooth soit à activer ou à désactiver dans un mode de fonctionnement spécial.

4. Procédé selon l'une quelconque des revendications précédentes,
**caractérisé en ce que**
le contenu des trames d'annonce Bluetooth émises par le module de pneu (5) est réglable pour la liaison Bluetooth.

5. Procédé selon l'une quelconque des revendications précédentes,
**caractérisé en ce que**
aucune donnée n'est transmise par le module de pneu (5), seules les données les plus importantes sont transmises par le module de pneu (5) ou toutes les données du module de pneu (5) sont transmises avec les trames d'annonce Bluetooth.

6. Procédé selon l'une quelconque des revendications précédentes,
**caractérisé en ce que**
la fréquence d'émission des trames d'annonce Bluetooth pour la liaison Bluetooth est réglable,
dans lequel la fréquence d'émission est comprise entre 1 et 64 secondes, de préférence égale à 4, 8, 16 ou 32 secondes.

7. Procédé selon l'une quelconque des revendications précédentes,
**caractérisé en ce que**
la fréquence d'émission dans le mode réception (12) pour un dispositif de réception stationnaire est comprise entre 2 et 128 secondes, de préférence égale à environ 16 secondes.

8. Procédé selon l'une quelconque des revendications précédentes,
**caractérisé en ce que**
la durée du mode réception (12) pour le dispositif de réception stationnaire est d'environ 4 minutes par défaut.

9. Procédé selon l'une quelconque des revendications précédentes,
**caractérisé en ce que**
la durée du mode réception (12) pour le dispositif de réception stationnaire peut être réglée de manière manuelle ou automatisée sur la valeur de 0 minute.

10. Procédé selon l'une quelconque des revendications précédentes,
**caractérisé en ce que**
la durée du mode réception (12) pour le dispositif de réception stationnaire peut être réglée de manière manuelle ou automatisée sur la valeur d'environ 2 minutes.

11. Procédé selon l'une quelconque des revendications précédentes,
**caractérisé en ce que**
la durée du mode réception (12) pour le dispositif de réception stationnaire peut être réglée de manière manuelle ou automatisée sur la valeur d'environ 8 minutes.

12. Procédé selon l'une quelconque des revendications précédentes,
**caractérisé en ce que**
le mode déplacement est composé de deux modes, notamment d'un premier mode bloc (10) à fréquence d'émission augmentée et d'un mode conduite (11) à fréquence d'émission réduite.

13. Procédé selon l'une quelconque des revendications précédentes,
**caractérisé en ce que**
le mode immobilisation est composé de deux modes, notamment d'un mode stationnement (9) et d'un mode intérimaire (13),
dans lequel le module de pneu (5) passe des deux modes au mode déplacement (10, 11) lorsque le module de pneu (5) détecte un déplacement du pneu de véhicule,
ou dans lequel le module de pneu (5) passe du mode intérimaire (13) au mode stationnement (9) lorsque pendant une durée prédéfinie, le module de pneu (5) ne détecte aucun déplacement du pneu de véhicule.

14. Procédé selon l'une quelconque des revendications précédentes,
**caractérisé en ce que**
les modules de pneu (5) présentent respectivement 2 microcontrôleurs,
dans lequel le premier microcontrôleur est mis en œuvre pour l'émission de télégrammes haute fréquence et le deuxième microcontrôleur est mis en œuvre pour la communication Bluetooth.
